# EUROPEAN PATENT APPLICATION

(11) **EP 2 251 808 A2**
(43) Date of publication of application: **17.11.2010**
(21) Application number: 10161710.8
(22) Date of filing: 03.05.2010
(51) Int. Cl.: G06F 21/00, H04W 4/02, H04L 29/06

(54) **Wireless communication system**

(30) Priority: 15.05.2009 JP 2009118555
(71) Applicant: NEC Corporation, Minato-ku Tokyo 108-8001 (JP)
(72) Inventor: Komatsu, Tatsuya, TOKYO 108-8001 (JP)
(74) Representative: Betten & Resch

(57) **Abstract**

A wireless communication system 100 includes a plurality of mobile station apparatuses 110a, 110b, etc., a base station apparatus 120, and an authentication object apparatus 130. The base station apparatus relays communications between one of the mobile station apparatuses through wireless communication with another one of the mobile station apparatuses. The base station apparatus and the authentication object apparatus are configured to be able to communicate with each other. The base station apparatus associates a mobile station apparatus identifier for identifying one of the mobile station apparatuses and an authentication object apparatus identifier for identifying the authentication object apparatus with each other and stores the associated identifiers (121). The base station apparatus detects one of the mobile station apparatuses which is in a state of capable of wireless communication (122). The base station apparatus transmits successful authentication information to the authentication object apparatus associated with the detected mobile station apparatus (123). The authentication object apparatus performs a successful authentication behavior when having received the successful authentication information (131).

## Description

### INCORPORATION BY REFERENCE

The present application claims priority from Japanese Patent Application No. 2009-118555, filed on May 15, 2009, the disclosure of which is incorporated herein by reference in its entirety.

### TECHNICAL FIELD

The present invention relates to wireless communication systems including a base station apparatus and a mobile station apparatus which are configured to be capable of wireless communication with each other.

### BACKGROUND ART

Wireless communication systems which forms a femtocell has been known. As one of such kind of wireless communication systems, the wireless communication system disclosed in Japanese Patent Laid-Open Publication No. 2009-094652 (Patent Document 1) includes a base station apparatus and a mobile station apparatus (for example, a cell-phone). The wireless communication system is configured to be capable of wireless communication between the base station apparatus and the mobile station apparatus within a comparatively small area.

The base station apparatus is often set up in residences, offices, and the like, where in order to improve security, there is usually installed an authentication object apparatus configured to request the users to input authentication information for performing a predetermined behavior (successful authentication behavior). The authentication object apparatus is an electrical product such as personal computers, audio equipment, television sets, and the like. Herein, the authentication information is composed, for example, of a user identifier and a password for identifying the user.

[Patent Document 1] JP 2009-094652 A

However, with the abovementioned authentication object apparatus, even though the authorized user is not in the vicinity of the authentication object apparatus, it is possible for an unauthorized user to make the authentication object apparatus perform the successful authentication behavior through unauthorizedly acquiring the authentication information.

Further, the authentication object apparatus displays an image urging to input authentication information at the time of requesting the user to input the authentication information. Therefore, an unauthorized user may realize the reason (for example, prong authentication information was input) as the successful authentication behavior is not performed. Hence, the possibility, that the unauthorized user may make the authentication object apparatus perform the successful authentication behavior, is comparatively high.

In this manner, with the authentication object apparatus, there has been a problem that the possibility, that the successful authentication behavior may be unauthorizedly performed, is comparatively high.

### SUMMARY

In view of the above, an exemplary object of the present invention is to provide a wireless communication system capable of solving the above problem: "the possibility, that the successful authentication behavior may be unauthorizedly performed, is comparatively high".

In order to achieve this exemplary object, an aspect in accordance with the present invention provides a wireless communication system which includes: a plurality of mobile station apparatuses; a base station apparatus relaying communications between one of the mobile station apparatuses and another one of the mobile station apparatuses through wireless communication with the one of the mobile station apparatuses; and an authentication object apparatus.

Further, the base station apparatus and the authentication object apparatus is configured to be able to communicate with each other.
In addition, the base station apparatus has an identifier storage means which associates a mobile station apparatus identifier for identifying one of the mobile station apparatuses with an authentication object apparatus identifier for identifying the authentication object apparatus and stores the associated identifiers, a mobile station apparatus detection means for detecting one of the mobile station apparatuses which is in a state of being capable of wireless communication with the base station apparatus, and a successful authentication information transmission means for transmitting successful authentication information indicating a successful authentication to the authentication object apparatus which is identified by the authentication object apparatus identifier associated with the mobile station apparatus identifier for identifying the detected mobile station apparatus.

Further, the authentication object apparatus has a behavior performance means for performing a predetermined successful authentication behavior when having received the successful authentication information from the base station apparatus.

Further, another aspect in accordance with the present invention provides a wireless communication method which is applied to a wireless communication system including: a plurality of mobile station apparatuses; a base station apparatus relaying communications between one of the mobile station apparatuses and another one of the mobile station apparatuses through wireless communication with the one of the mobile station apparatuses; and an authentication object apparatus configured to be able to communicate with the base station apparatus.

Further, the wireless communication method includes: detecting, by the base station apparatus, one of the mobile station apparatuses which is in a state of being capable of wireless communication with the base station apparatus; transmitting, by the base station apparatus, successful authentication information indicating a successful authentication to the authentication object apparatus identified by an authentication object apparatus identifier which is associated with a mobile station apparatus identifier for identifying the detected mobile station apparatus, and stored in a storage device, among the authentication object apparatus identifiers for identifying the authentication object apparatus; and performing, by the authentication object apparatus, a predetermined successful authentication behavior when having received the successful authentication information from the base station apparatus.

Further, still another aspect in accordance with the present invention provides a base station apparatus which relays communication between a mobile station apparatus and another mobile station apparatus through wireless communication with the mobile station apparatus.

Further, the base station apparatus is configured to be able to communicate with an authentication object apparatus.
In addition, the base station apparatus includes: an identifier storage means for associating a mobile station apparatus identifier for identifying the mobile station apparatus and an authentication object apparatus identifier for identifying the authentication object apparatus with each other, and storing the associated identifiers; a mobile station apparatus detection means for detecting the mobile station apparatus which is in a state of being capable of wireless communication with the base station apparatus; and a successful authentication information transmission means for transmitting successful authentication information indicating a successful authentication to the authentication object apparatus identified by the authentication object apparatus identifier associated with the mobile station apparatus identifier for identifying the detected mobile station apparatus.

Further, still another aspect in accordance with the present invention provides a computer program product including computer implementable instructions to make a base station apparatus, which is configured to relay communication between a mobile station apparatus and another mobile station apparatus through wireless communication with the mobile station apparatus and to be able to communicate with an authentication object apparatus, implement the functions of: a mobile station apparatus detection means for detecting the mobile station apparatus which is in a state of being capable of wireless communication with the base station apparatus; and a successful authentication information transmission means for transmitting successful authentication information indicating a successful authentication to the authentication object apparatus identified by an authentication object apparatus identifier which is associated with a mobile station apparatus identifier for identifying the detected mobile station apparatus and stored in a storage device, among the authentication object apparatus identifiers for identifying the authentication object apparatus.

By virtue of the above configurations, the present invention is able to reduce the possibility that the successful authentication behavior may be unauthorizedly performed.

### BRIEF DESCRIPTION OF THE DRAWINGS

Fig. 1 shows a schematic configuration of a wireless communication system in accordance with a first exemplary embodiment of the present invention;
Fig. 2 is a block diagram showing a schematic function of the wireless communication system in accordance with the first exemplary embodiment of the present invention;
Fig. 3 is a table which is stored by a base station apparatus and in which a mobile station apparatus identifier, an authentication object apparatus identifier, and behavior specification information are associated with each other in accordance with the first exemplary embodiment of the present invention;
Fig. 4 is a flowchart showing a mobile station apparatus detection processing program executed by a CPU of the base station apparatus in accordance with the first exemplary embodiment of the present invention;
Fig. 5 is a flowchart showing a startup authentication processing program executed by a CPU of an authentication object apparatus in accordance with the first exemplary embodiment of the present invention;
Fig. 6 is a flowchart showing a successful authentication notification reception processing program executed by a CPU of a mobile station apparatus in accordance with the first exemplary embodiment of the present invention;
Fig. 7 is a flowchart showing a performance stop instruction reception processing program executed by the CPU of the authentication object apparatus in accordance with the first exemplary embodiment of the present invention;
Fig. 8 is a flowchart showing an unauthorized utilization notification reception processing program executed by the CPU of the mobile station apparatus in accordance with the first exemplary embodiment of the present invention;
Fig. 9 is a flowchart showing a performance authorization instruction reception processing program executed by the CPU of the authentication object apparatus in accordance with the first exemplary embodiment of the present invention; and
Fig. 10 is a block diagram showing a schematic function of a wireless communication system in accordance with a second exemplary embodiment of the present invention.

### EXEMPLARY EMBODIMENT

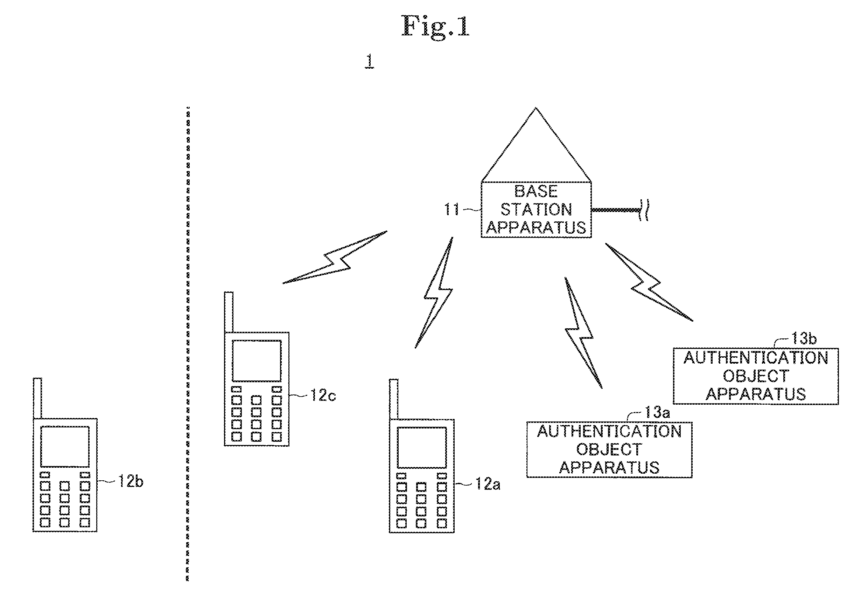

Hereinafter, descriptions will be made with respect to exemplary embodiments of a wireless communication system, a wireless communication method, a base station apparatus, and a computer program in reference to the accompanying Figs. 1 to 10.

### <A First Exemplary Embodiment>

### (Configuration)

As shown in Fig. 1, a wireless communication system 1 in accordance with a first exemplary embodiment includes a base station apparatus 11, cell-phones 12a and 12b as mobile station apparatuses, a cell-phone 12c as a management apparatus, and information processing apparatuses 13a and 13b as authentication object apparatuses.

The base station apparatus 11 is connected on a cell-phone network (not shown). In the exemplary embodiment, the base station apparatus 11 forms a femtocell. The base station apparatus 11 is also referred to as a Home Node B (HNB).

The base station apparatus 11 is configured to be capable of wireless communications with the cell-phones 12a, 12b, and 12c in accordance with a first wireless communication system when each of the cell-phones 12a, 12b, and 12c is located within a first coverage area (for example, the area of a circle which is centered on the base station apparatus 11 and has a predetermined radius, e.g., 1 m to 100 m).

Herein, the first wireless communication system is in accordance with a communication standard for cell-phone networks such as W-CDMA (Wideband Code Division Multiple Access; "WCDMA" is a registered trademark), CDMA 2000 (Code Division Multiple Access 2000), LTE (Long Term Evolution), and the like which are prescribed, for example, by 3GPP (Third Generation Partnership Project), 3GPP 2 (Third Generation Partnership Project 2), and the like.

By virtue of such a configuration, the base station apparatus 11 relays communications between the cell-phones 12a, 12b, and 12c, and another cell-phone connected on the cell-phone network through wireless communications with the cell-phones 12a, 12b, and 12c.

Further, the base station apparatus 11 is configured to be capable of wireless communications with the information processing apparatuses 13a and 13b in accordance with a second wireless communication system when each of the information processing apparatuses 13a and 13b is located within a second coverage area (for example, the area of a circle which is centered on the base station apparatus 11 and has a predetermined radius, e.g., 1 m to 100 m).

Herein, the second wireless communication system is in accordance with a communication standard such as IEEE 802.11 (WiFi: Wireless Fidelity, etc.), IEEE 802.15 (Bluetooth, etc.), IEEE 802.16 (WiMAX: Worldwide Interoperability for Microwave Access, etc.), and the like which are prescribed, for example, by IEEE (The Institute of Electrical and Electronics Engineers, Inc.) and the like.
In addition, the base station apparatus 11 may also be connected to each of the information processing apparatuses 13a and 13b with a cable in an able-to-communicat manner.

The base station apparatus 11 has a CPU (Central Processing Unit; not shown) and a storage device (a memory device, and an HDD: Hard Disk Drive). The base station apparatus 11 is configured to implement a function, which will be described hereinafter, by the CPU executing a computer program stored in the storage device.

Each of the cell-phones 12a, 12b, and 12c has a CPU, a storage device (memory), an input device (a microphone and a plurality of key buttons in the exemplary embodiment), and an output device (a speaker and a display in the exemplary embodiment). Further, each of the cell-phones 12a, 12b, and 12c has a communication device (including an antenna for communication) which carries out wireless communication in accordance with the first wireless communication system,

Each of the cell-phones 12a, 12b, and 12c is configured to implement a function, which will be described hereinafter, by the CPU executing a computer program stored in the storage device.

In the exemplary embodiment, each of the information processing apparatuses 13a and 13b is a personal computer. Each of the information processing apparatuses 13a and 13b has a CPU, a storage device (memory), an input device (a mouse and a keyboard in the exemplary embodiment), and an output device (a display in the exemplary embodiment). Further, each of the information processing apparatuses 13a and 13b has a communication device (including an antenna for communication) which carries out wireless communication in accordance with the second wireless communication system.

Each of the information processing apparatuses 13a and 13b is configured to implement a function, which will be described hereinafter, by the CPU executing a computer program stored in the storage device.

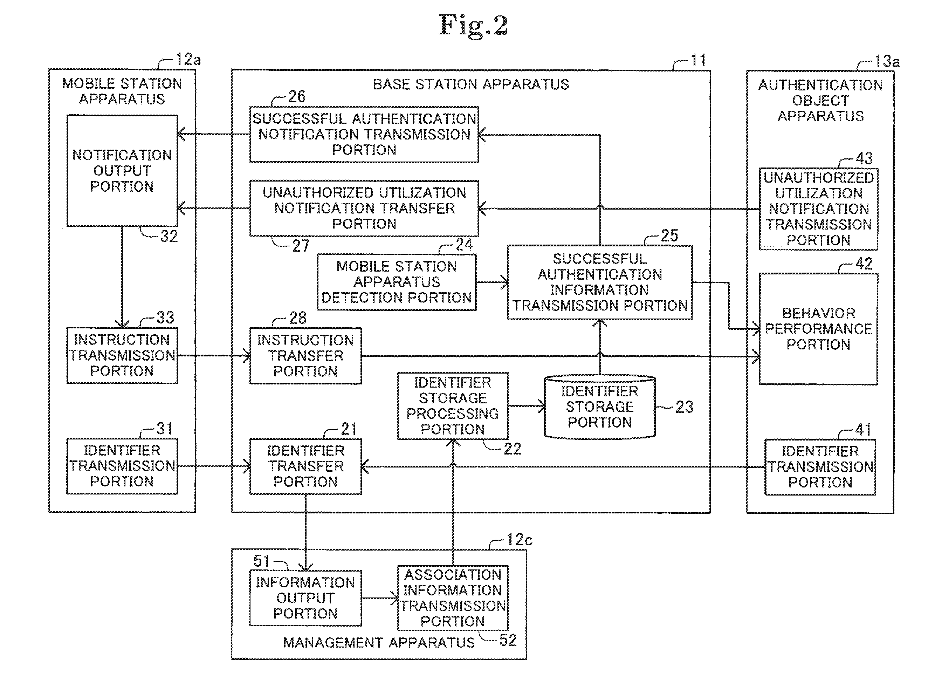

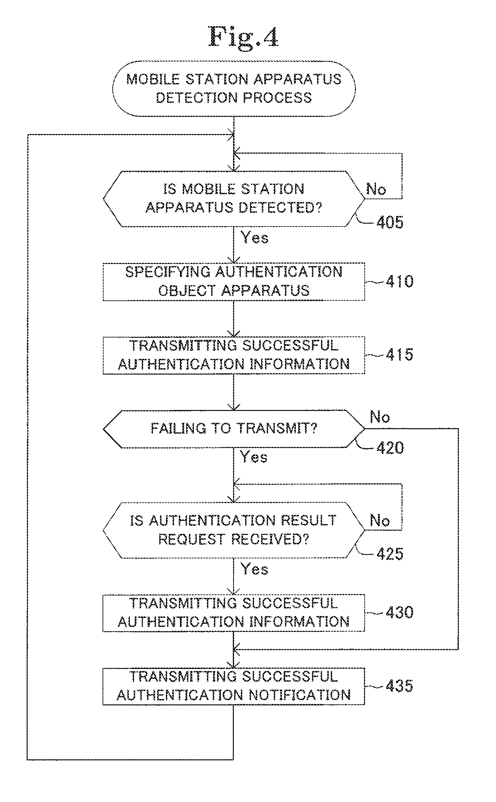

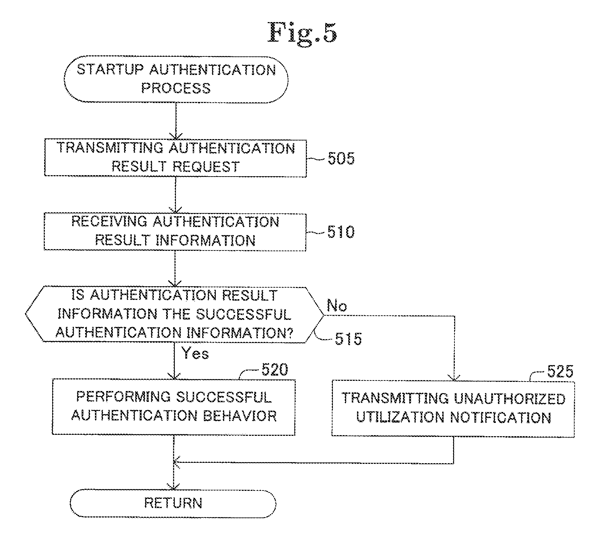

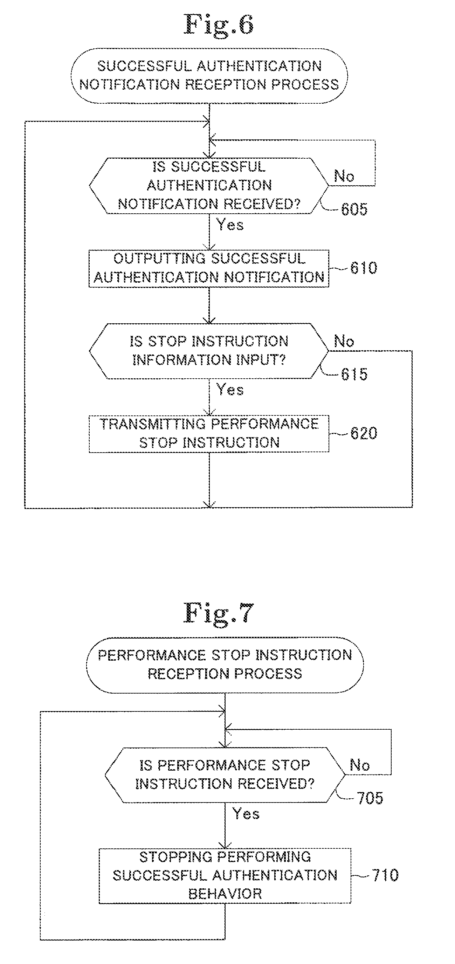

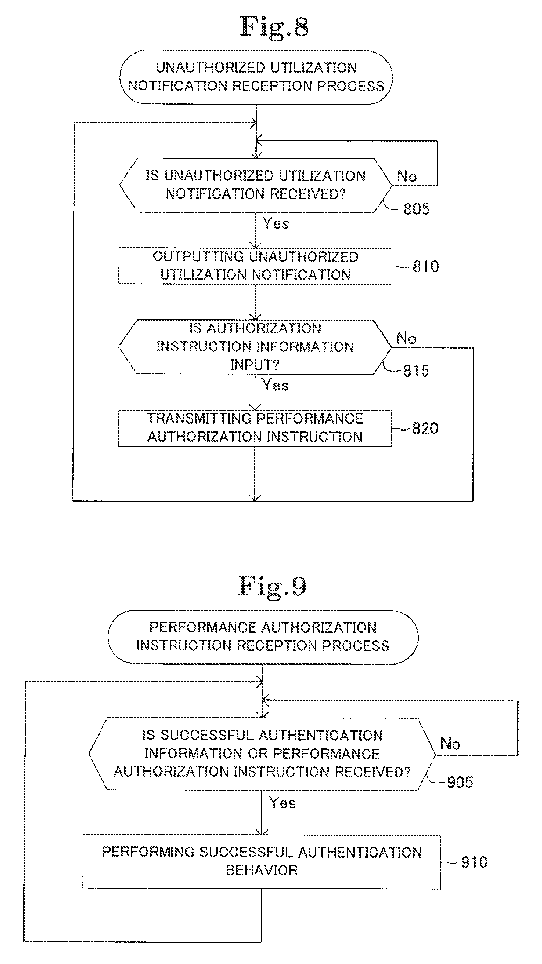

Fig. 2 is a block diagram showing a schematic function of the wireless communication system 1 configured in the above manner. To implement this function, the CPU of the base station apparatus 11 executes a computer program illustrated by the flowchart shown in Fig. 4, etc., which will be described hereinafter, while the CPUs of the authentication object apparatuses 13a and 13b execute computer programs illustrated by the flowcharts shown in Figs. 5, 7, and 9, etc., which will be described hereinafter, and the CPUs of the mobile station apparatuses 12a and 12b execute computer programs illustrated by the flowcharts shown, in Figs. 6 and 8, etc., which will be described hereinafter.

The function of the base station apparatus 11 includes: an identifier transfer portion 21 (identifier transfer means), an identifier storage processing portion 22 (identifier storage processing means), an identifier storage portion 23 (identifier storage means), a mobile station apparatus detection portion 24 (mobile station apparatus detection means), a successful authentication information transmission portion 25 (successful authentication information transmission means), a successful authentication notification transmission portion 26 (successful authentication notification transmission means), an unauthorized utilization notification transfer portion 27 (unauthorized utilization notification transfer means), and an instruction transfer portion 28 (a performance stop instruction transfer means and a performance authorization instruction transfer means).

Further, the function of the mobile station apparatus 12a includes: an identifier transmission portion 31 (identifier transmission means), a notification output portion 32 (a successful authentication notification output means and an unauthorized utilization notification output means), and an instruction transmission portion 33 (a performance stop instruction transmission means and a performance authorization instruction transmission means). In addition, the function of the mobile station apparatus 12b is the same as that of the mobile station apparatus 12a.

Further, the function of the authentication object apparatus 13a includes: an identifier transmission portion 41 (identifier transmission means), a behavior performance portion 42 (behavior performance means), and an unauthorized utilization notification transmission portion 43 (unauthorized utilization notification transmission means). In addition, the function of the authentication object apparatus 13b is the same as that of the authentication object apparatus 13a.
The function of the management apparatus 12c includes: an information output portion 51 (information output means) and an association information transmission portion 52 (association information transmission means).

When the mobile station apparatus 12a is in a state of being capable of wireless communication with the base station apparatus 11 (that is, the mobile station apparatus 12a is located within the first coverage area), the identifier transmission portion 31 of the mobile station apparatus 12a transmits a mobile station apparatus identifier for identifying the mobile station apparatus 12a to the base station apparatus 11. In the exemplary embodiment, the mobile station apparatus identifier is an IMSI (International Mobile Subscriber Hentity). In addition, the mobile station apparatus identifier may also be other information such as a telephone number and the like.

When the authentication object apparatus 13a is in a state of being capable of wireless communication with the base station apparatus 11 (that is, the authentication object apparatus 13a is located within the second coverage area), the identifier transmission portion 41 of the authentication object apparatus 13a transmits an authentication object apparatus identifier for identifying the authentication object apparatus 13a to the base station apparatus 11. in the exemplary embodiment, the authentication object apparatus identifier is an IP (Internet Protocol) address. In addition, the authentication object apparatus identifier may also be other information such as an MAC (Media Access Control) address and the like.

The identifier transfer portion 21 of the base station apparatus 11 receives the mobile station apparatus identifier from the mobile station apparatus 12a. Further, the identifier transfer portion 21 receives the authentication object apparatus identifier from the authentication object apparatus 13a. Then, the identifier transfer portion 21 transmits the received mobile station apparatus identifier and the authentication object apparatus identifier to the management apparatus 12c.

The information output portion 51 of the management apparatus 12c receives the mobile station apparatus identifier and the authentication object apparatus identifier from the base station apparatus 11. The information output portion 51 outputs information urging to input association information for associating the received mobile station apparatus identifier with the authentication object apparatus identifier,

In the exemplary embodiment, the information output portion 51 shows on a display an image illustrating a list of the received mobile station apparatus identifiers and authentication object apparatus identifiers and a list of behavior specification information. Herein, the behavior specification information is for specifying a successful authentication behavior to be performed by the authentication object apparatus on a successful authentication. Then, the information output portion 51 accepts the association information which has been input by the user of the management apparatus 12c.

In the exemplary embodiment, a piece of the association information includes each one of the associating objects: the mobile station apparatus identifier, the authentication object apparatus identifier, and the behavior specification information.
When the information output portion 51 has accepted the association information, the association information transmission portion 52 of the management apparatus 12c transmits the association information to the base station apparatus 11.

The identifier storage processing portion 22 of the base station apparatus 11 receives the association information from the management apparatus 12c. Then, based on the received association information, the identifier storage processing portion 22 associates the mobile station apparatus identifier, the authentication object apparatus identifier, and the behavior specification information with each other, and then stores them in the identifier storage portion 23. In particular, the identifier storage processing portion 22 associates with each other the mobile station apparatus identifier, the authentication object apparatus identifier, and the behavior specification information which are included in the received association information, and lets the identifier storage portion 23 store the associated members thereafter.

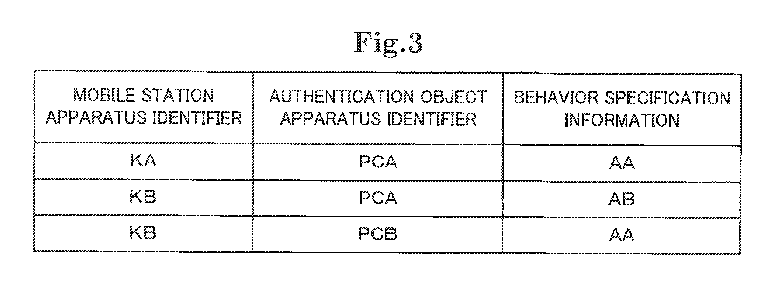

As shown in Fig. 3, the identifier storage portion 23 of the base station apparatus 11 associates the mobile station apparatus identifier, the authentication object apparatus identifier, and the behavior specification information with each other and stores them.
Further, the mobile station apparatus identifier "KA" is for identifying the mobile station apparatus 12a, and the mobile station apparatus identifier "KB" is for identifying the mobile station apparatus 12b. Further, the authentication object apparatus identifier "PCA" is for identifying the authentication object apparatus 13a, and the authentication object apparatus identifier "PCB" is for identifying the authentication object apparatus 13b.

Further, the behavior specification information "AA" is for specifying the behavior which sets an authentication object apparatus to a state in which the user is able to make the authentication object apparatus carry out any process. The behavior specification information "AB" is for specifying the behavior which sets an authentication object apparatus to a state of being able to communicate with a specific information processing system (a login state).

The mobile station apparatus detection portion 24 of the base station apparatus 11 detects the mobile station apparatuses 12a and 12b which are in a state of being capable of wireless communication with the base station apparatus 11. In the exemplary embodiment, having received a predetermined signal form the mobile station apparatuses 12a and 12b, the mobile station apparatus detection portion 24 detects the mobile station apparatuses 12a and 12b which have transmitted the signal as mobile station apparatuses in a state of being capable of wireless communication. The mobile station apparatus detection portion 24 outputs the mobile station apparatus identifier for identifying the detected mobile station apparatus.

The successful authentication information transmission portion 25 of the base station apparatus 11 obtains the authentication object apparatus identifier and the behavior specification information which are associated with the mobile station apparatus identifier output by the mobile station apparatus detection portion 24, among the authentication object apparatus identifiers and the behavior specification information stored in the identifier storage portion 23. Then, the successful authentication information transmission portion 25 transmits successful authentication information which indicates a successful authentication and includes the obtained behavior specification information, to the authentication object apparatus identified by the obtained authentication object apparatus identifier.

The behavior performance portion 42 of the authentication object apparatus 13a receives the successful, authentication information from the base station apparatus 11. Having received the successful authentication information, the behavior performance portion 42 performs the successful authentication behavior specified by the behavior specification information included in the received successful authentication information.

When the successful authentication information transmission portion 25 has transmitted the successful authentication information to the authentication object apparatuses 13a and 13b, the successful authentication notification transmission portion 26 of the base station apparatus 11 obtains the mobile station apparatus identifier which is associated with the authentication object apparatus identifier for identifying the authentication object apparatus (as the destination of the successful authentication information), among the mobile station apparatus identifiers stored in the identifier storage portion 23, Then, the successful authentication notification transmission portion 26 transmits a successful authentication notification indicating a successful authentication of the authentication object apparatus as the destination of the successful authentication information, to the mobile station apparatuses 12a and 12b identified by the obtained mobile station apparatus identifier.

The notification output portion 32 of the mobile station apparatus 12a receives the successful authentication notification from the base station apparatus 11. Then, having received the successful authentication notification, the notification output portion 32 outputs the received successful authentication notification. Further, having received the successful authentication notification, the notification output portion 32 outputs information urging to input stop instruction information instructing to stop performing the successful authentication behavior.

In particular, the notification output portion 32 shows on a display an image showing the successful authentication notification, and the information urging to input the stop instruction information. Then, notification output portion 32 accepts the stop instruction information which has been input by the user of the mobile station apparatus 12a.

In the exemplary embodiment, the stop instruction information includes each one of the authentication object apparatus identifier and the behavior specification information.
When the notification output portion 32 has accepted the stop instruction information, the instruction transmission portion 33 of the mobile station apparatus 12a transmits to the base station apparatus 11 a performance stop instruction for instructing to stop performing the successful authentication behavior. The performance stop instruction includes the authentication object apparatus identifier and the behavior specification information which are included in the stop instruction information.

The instruction transfer portion 28 of the base station apparatus 11 receives the performance stop instruction from the mobile station apparatuses 12a and 12b. The instruction transfer portion 28 transmits the received performance stop instruction to the authentication object apparatuses 13a and 13b identified by the authentication object apparatus identifier included in the performance stop instruction.

The behavior performance portion 42 of the authentication object apparatus 13a receives the performance stop instruction from the base station apparatus 11. Having received the performance stop instruction, the behavior performance portion 42 stops performing the successful authentication behavior specified by the behavior specification information included in the performance stop instruction.

In particular, when "AA" is the behavior specification information included in the performance stop instruction, the behavior performance portion 42 sets the authentication object apparatus 13a to a state in which the user is unable to make the authentication object apparatus 13a carry out any process. For example, the behavior performance portion 42 stops the behavior of the authentication object apparatus 13a (shuts down the authentication object apparatus 13a).

Further, when "AB" is the behavior specification information included in the performance stop instruction, the behavior performance portion 42 sets the authentication object apparatus 13a to a state of being unable to communicate with a specific information processing system (a logout state).

On the other hand, the unauthorized utilization notification transmission portion 43 of the authentication object apparatus 13a determines whether it has been instructed to perform the successful authentication behavior. In particular, when the authentication object apparatus 13a has been started up, the unauthorized utilization notification transmission portion 43 determines that it has been instructed to perform the successful authentication behavior specified by the behavior specification information "AA". Further, when it has been instructed to execute a predetermined program which carries out communication with a specific information processing system, the unauthorized utilization notification transmission portion 43 determines that it has been instructed to perform the successful authentication behavior specified by the behavior specification information "AB".

Then, determining that it has been instructed to perform the successful authentication behavior without receiving the successful authentication information, the unauthorized utilization notification transmission portion 43 transmits to the base station apparatus 11 an unauthorized utilization notification indicating that the authentication object apparatus is being unauthorizedly utilized. In the exemplary embodiment, the unauthorized utilization notification includes the authentication object apparatus identifier.

The unauthorized utilization notification transfer portion 27 of the base station apparatus 11 receives the unauthorized utilization notification from the authentication object apparatus 13a. Having received the unauthorized utilization notification, the unauthorized utilization notification transfer portion 27 obtains the mobile station apparatus identifier which is associated with the authentication object apparatus identifier included in the unauthorized utilization notification, among the mobile station apparatus identifiers stored in the identifier storage portion 23. The unauthorized utilization notification transfer portion 27 transmits the unauthorized utilization notification to the mobile station apparatus identified by the obtained mobile station apparatus identifier.

The notification output portion 32 of the mobile station apparatus 12a receives the unauthorized utilization notification from the base station apparatus 11. Then, having received the unauthorized utilization notification, the notification output portion 32 outputs the received unauthorized utilization notification. Further, having received the unauthorized utilization notification, the notification output portion 32 outputs information urging to input authorization instruction information instructing to authorize performance of the successful authentication behavior.

In particular, the notification output portion 32 shows on the display an image showing the unauthorized utilization notification, and the information urging to input the authorization instruction information. Then, the notification output portion 32 accepts the authorization instruction information which has been input by the user of the mobile station apparatus 12a.

In the exemplary embodiment, the authorization instruction information includes each one of the authentication object apparatus identifier and the behavior specification information.
When the notification output portion 32 has accepted the authorization instruction information, the instruction transmission portion 33 of the mobile station apparatus 12a transmits to the base station apparatus 11 a performance authorization instruction for instructing to authorize performance of the successful authentication behavior. The performance authorization instruction includes the authentication object apparatus identifier and the behavior specification information which are included in the authorization instruction information.

The instruction transfer portion 28 of the base station apparatus 11 receives the performance authorization instruction from the mobile station apparatuses 12a and 12b. The instruction transfer portion 28 transmits the received performance authorization instruction to the authentication object apparatuses 13a and 13b identified by the authentication object apparatus identifier included in the performance authorization instruction.

The behavior performance portion 42 of the authentication object apparatus 13a receives the performance authorization instruction from the base station apparatus 11. Having received the performance authorization instruction, the behavior performance portion 42 performs the successful authentication behavior specified by the behavior specification information included in the performance authorization instruction,

### (Operation)

Next, a description will be made in particular with respect to an operation of the abovementioned wireless communication system 1.
The CPU of the base station apparatus 11 is set to execute a mobile station apparatus detection processing program shown by the flowchart in Fig. 4 when the base station apparatus 11 is started up.

In particular, having started the process of the mobile station apparatus detection processing program, the CPU stands by in the step 405 until detecting a mobile station apparatus.

Now, the description is made on the assumption that the mobile station apparatus 12a has moved into the first coverage area from the outside. Further, it is assumed that the mobile station apparatus identifier, the authentication object apparatus identifier, and the behavior specification information are associated with each other and stored, as shown in Fig. 3, in the storage device of the base station apparatus 11 by the user of the management apparatus 12c inputting the association information. Furthermore, it is assumed that the authentication object apparatus 13a has not been started up.

In this case, the base station apparatus 11 detects the mobile station apparatus 12a as a mobile station apparatus which is in a state of being capable of wireless communication (a mobile station apparatus detection process). Thereby, the CPU of the base station apparatus 11 determines the result as "Yes" in the step 405, and the process proceeds to the step 410 to specify the authentication object apparatuses 13a and 13b which are associated with the detected mobile station apparatus 12a. In particular, the CPU obtains the authentication object apparatus identifier "PCA" and the behavior specification information "AA" which are associated with the mobile station apparatus identifier "KA" for identifying the detected mobile station apparatus 12a, among the authentication object apparatus identifiers and the behavior specification information which are stored in the storage device.

Then, the CPU transmits the successful authentication information which includes the obtained behavior specification information "AA' to the authentication object apparatus 13a identified by the obtained authentication object apparatus identifier "PCA" (the step 415: part of a successful authentication information transmission process).

Next, the CPU determines whether it has failed to transmit the successful authentication information (the step 420). According to the above assumption, since the authentication object apparatus 13a has not been started up, the base station apparatus 11 fails to transmit the successful authentication information. That is, the base station apparatus 11 is unable to receive from the authentication object apparatus 13a the information indicating that the successful authentication information has been received.

Therefore, the CPU determines the result as "Yes", and the process proceeds to the step 425. Then, the CPU stands by until receiving an authentication result request from the authentication object apparatus 13a. Herein, the authentication result request indicates a request to transmit authentication result information indicating whether the authentication is successful.

Next, the description will be continued on the assumption that the authentication object apparatus 13a has been started up.
The CPU of the authentication object apparatus 13a is set to execute a startup authentication processing program shown by the flowchart in Fig. 5 when the authentication object apparatus 13a is started up,

In particular, having started the process of the startup authentication processing program, the CPU transmits the authentication result request to the base station apparatus 11 in the step 505. Then, the CPU stands by until receiving the authentication result information from the base station apparatus 11.

On the other hand, the base station apparatus 11 receives the authentication result request from the authentication object apparatus 13a. Thereby, the CPU of the base station apparatus 11 determines the result as "Yes" in the step 425, and the process proceeds to the step 430 to transmit the successful authentication information as the authentication result information to the authentication object apparatus 13a (part of the successful authentication information transmission process).

Then, the CPU obtains the mobile station apparatus identifier "KA" which is associated with the authentication object apparatus identifier "PCN" for identifying the authentication object apparatus 13a, among the mobile station apparatus identifiers stored in the storage device, Then, the CPU transmits a successful authentication notification indicating that the authentication object apparatus 13a has succeeded in authentication to the mobile station apparatus 12a identified by the obtained mobile station apparatus identifier "KA" (the step 435: a successful authentication notification transmission process).

Thereafter, the CPU turns the process back to the step 405 and repeatedly carries out the processes of the steps 405 to 435.
Further, when the CPU transmits the successful authentication information in the step 415, if the authentication object apparatus 13a has been started up, the transmission of the successful authentication information succeeds. Therefore, the CPU determines the result as "No" in the step 420 and carries out the processes of the step 435 and the succeeding steps without carrying out the processes of the steps 425 and 430.

On the other hand, the CPU of the authentication object apparatus 13a receives the authentication result information from the base station apparatus 11 (the step 510). Then, the process proceeds to the step 515, and the CPU determines whether the received authentication result information is successful authentication information. Herein, since the authentication result information is successful authentication information, the CPU determines the result as "Yes", and the process proceeds to the step 520.

Then, the CPU performs the successful authentication behavior specified by the behavior specification information "AA" included in the received successful authentication information (part of a behavior performance process). In the exemplary embodiment, the CPU sets the authentication object apparatus 13a to a state in which the user is able to make the authentication object apparatus 13a carry out any process.
Thereafter, the CPU terminates execution of the startup authentication processing program.

On the other hand, the CPU of the mobile station apparatus 12a is set to execute a successful authentication notification reception processing program shown by the flowchart in Fig. 6 when the mobile station apparatus 12a is started up.

In particular, having started the process of the successful authentication notification reception processing program, the CPU stands by in the step 605 until receiving the successful authentication notification. According to the above assumption, the mobile station apparatus 12a receives the successful authentication notitication from the base station apparatus 11. Therefore, the CPU of the mobile station apparatus 12a determines the result as "Yes" in the step 605, and the process proceeds to the step 610.

Subsequently, the CPU outputs an image showing the successful authentication notification, and information urging to input stop instruction information (a successful authentication notification output process to show that on the display). Thereby, it is possible to let the user of the mobile station apparatus 12a know that the authentication object apparatus 13a has succeeded in authentication.

Then, the CPU determines whether the stop instruction information has been input (the step 615). If the user of the mobile station apparatus 12a does not input the stop instruction information, the CPU determines the result as "No", turns the process back to the step 605, and repeatedly carries out the processes of the steps 605 to 620.

On the other hand, if the user of the mobile station apparatus 12a has input the stop instruction information, the CPU determines the result as "Yes" in the step 615, and the process proceeds to the step 620. Then, the CPU transmits a performance stop instruction to the base station apparatus 11 (a performance stop instruction transmission process). Herein, the performance stop instruction includes the authentication object apparatus identifier "PCA" and the behavior specification information "AA" which are included in the stop instruction information.
Thereafter, the CPU turns the process back to the step 605 and repeatedly carries out the processes of the steps 605 to 620.

Having received the performance stop instruction from the mobile station apparatus 12a, the base station apparatus 11 transmits the performance stop instruction to the authentication object apparatus 13a identified by the authentication object apparatus identifier "pica" included in the performance stop instruction (a performance stop instruction transfer process).

On the other hand, the CPU of the authentication object apparatus 13a is set to execute a performance stop instruction reception processing program shown by the flowchart in Fig. 7 when the authentication object apparatus 13a is started up.

In particular, having started the process of the performance stop instruction reception processing program, the CPU stands by in the step 705 until receiving the performance stop instruction. According to the above assumption, the authentication object apparatus 13a receives the performance stop instruction from the mobile station apparatus 12a via the base station apparatus 11.

Therefore, the CPU determines the result as "Yes", and the process proceeds to the step 710 to stop performing the successful authentication behavior specified by the behavior specification information included in the received performance stop instruction (part of the behavior performance process). In the exemplary embodiment, the CPU sets the authentication object apparatus 13a to a state in which the user is unable to make the authentication object apparatus 13a carry out any process.

Thereby, being notified that the authentication object apparatus 13a has succeeded in authentication, the user of the mobile station apparatus 12a is able to stop performing the successful authentication behavior if not desiring the authentication object apparatus 13a to perform the successful authentication behavior, As a result, the mobile station apparatus 12a can be improved in convenience for the user.

Thereafter, the CPU turns the process back to the step 705 and repeatedly carries out the processes of the steps 705 and 710.

Next, a description will be made with respect to the case that the authentication object apparatus 13a has been started up, while the mobile station apparatus 12a is not located within the first coverage area.
In this case, having received an authentication result request from an authentication object apparatus, the CPU of the base station apparatus 11 transmits failing authentication information indicating a failing authentication as the authentication result information to the authentication object apparatus if the mobile station apparatus, which is identified by the mobile station apparatus identifier which is associated with the authentication object apparatus and stored in a storage device, is not in a state of being capable of wireless communication.

Therefore, according to the above assumption, when the authentication object apparatus 13a has been started up, in response to the authentication result request transmitted by the authentication object apparatus 13a (the step 505), the base station apparatus 11 transmits filling authentication information as the authentication result information to the authentication object apparatus 13a.

Therefore, the CPU of the authentication object apparatus 13a determines the result as "No" in the step 515, and the process proceeds to the step 525. Then, the CPU transmits an unauthorized utilization notification indicating that the authentication object apparatus 13a is being unauthorizedly utilized to the base station apparatus 1 (the step 525: an unauthorized utilization notification transmission process). Herein, the unauthorized utilization notification includes the authentication object apparatus identifier "PCA" for identifying the authentication object apparatus 13a. Thereafter, the CPU terminates execution of the startup authentication processing program,

Having received the unauthorized utilization notification from the authentication object apparatus 13a. the base station apparatus 11 obtains the mobile station apparatus identifier "KA" which is associated with the authentication object apparatus identifier "PCA" included in the unauthorized utilization notification, among the mobile station apparatus identifiers stored in the storage device. Then, the base station apparatus 11 transmits the unauthorized utilization notification to the mobile station apparatus 12a identified by the obtained mobile station apparatus identifier "KA" (an unauthorized utilization notification transfer process).

On the other hand, the CPU of the mobile station apparatus 12a is set to execute an unauthorized utilization notification reception processing program shown by the flowchart in Fig. 8 when the mobile station apparatus 12a is started up.

In particular, having started the process of the unauthorized utilization notification reception processing program, the CPU stands by in the step 805 until receiving the unauthorized utilization notification. According to the above assumption, the mobile station apparatus 12a receives the unauthorized utilization notification which includes the authentication object apparatus identifier "PCA".

Therefore, the CPU of the mobile station apparatus 12a determines the result as "Yes", and the process proceeds to the step 810 to output an image showing the unauthorized utilization notification, and information urging to input authorization instruction information (an unauthorized utilization notification output process to show that on the display). Thereby, it is possible to let the user of the mobile station apparatus 12a know that the authentication object apparatus 13a is being unauthorizedly utilized.

Then, the CPU determines whether the authorization instruction information has been input (the step 815). If the user of the mobile station apparatus 12a does not input the authorization instruction information, the CPU determines the result as "No", turns the process back to the step 805, and repeatedly carries out the processes of the steps 805 to 820.

On the other hand, if the user of the mobile station apparatus 12a has input the authorization instruction information, the CPU determines the result as "Yes" in the step 815, and the process proceeds to the step 820. Then, the CPU transmits a performance authorization instruction to the base station apparatus 11 (a performance authorization instruction transmission process). The performance authorization instruction includes the authentication object apparatus identifier "PCA" and the behavior specification information "AA" which are included in the authorization instruction information.
Thereafter, the CPU turns the process back to the step 805 and repeatedly carries out the processes of the steps 805 to 820.

Having received the performance authorization instruction from the mobile station apparatus 12, the base station apparatus 11 transmits the performance authorization instruction to the authentication object apparatus 13a identified by the authentication object apparatus identifier "PCA" included in the performance authorization instruction (a performance authorization instruction transfer process).

On the other hand, the CPU of the authentication object apparatus 13a is set to execute a performance authorization instruction reception processing program shown by the flowchart in Fig. 9 when the authentication object apparatus 13a is started up.

In particular, having started the process of the performance authorization instruction reception processing program, the CPU stands by in the step 905 until receiving the successful authentication information or the performance authorization instruction. According to the above assumption, the authentication object apparatus 13a receives the performance authorization instruction from the mobile station apparatus 12a via the base station apparatus 11.

Therefore, the CPU determines the result as "Yes", and the process proceeds to the step 910 to perform the successful authentication behavior specified by the behavior specification information included in the received performance authorization instruction (part of the behavior performance process).

Thereby, being notified that the authentication object apparatus 13a is being unauthorizedly utilized, the user of the mobile station apparatus 12a is able to make it perform the successful authentication behavior if desiring the authentication object apparatus 13a to perform the successful authentication behavior. As a result, the mobile station apparatus 12a and the authentication object apparatus 13a can be improved in convenience for the user.

Thereafter, the CPU turns the process back to the step 905 and repeatedly carries out the processes of the steps 905 and 910.

As has been explained hereinabove, according to the first exemplary embodiment of the wireless communication system in accordance with the present invention, when the mobile station apparatus 12a is located within the area of being able to communicate with the base station apparatus 11 (the first coverage area), the authentication object apparatus 13a performs the successful authentication behavior, which is, for example, to set the authentication object apparatus 13a to a state in which the user is able to make the authentication object apparatus 13a carry out any process, to set the authentication object apparatus 13a to a state of being able to communicate with a specific information processing system (a login state), etc.

Thereby, the successful authentication behavior can be prevented from unauthorized performance under the circumstance that the authorized user who possesses the mobile station apparatus 12a is not in the vicinity of the authentication object apparatus 13a.

Further, according to the wireless communication system 1, it is unnecessary to display an image requesting the user to input authentication information (for example, a user ID and a password). Therefore, it is possible to reduce the possibility that the user may realize the reason why the successful authentication behavior is not performed. As a result, it is possible to reduce the possibility that an unauthorized user may unauthorizedly make the authentication object apparatuses 13a and 13b perform the successful authentication behavior (that is, to improve the security of the authentication object apparatuses 13a and 13b).

In this manner, according to the above wireless communication system 1, it is possible to reduce the possibility that the successful authentication behavior may be unauthorizedly performed. In addition, according to the wireless communication system 1, since it is unnecessary for the user to input authentication information, it is possible to reduce user's time and effort for making the authentication object apparatuses 13a and 13b perform the successful authentication behavior.

Further, in the wireless communication system 1, the base station apparatus 11 forms a femtocell.
Thus, in the wireless communication system 1 forming a femtocell, the base station apparatus 11 and the mobile station apparatuses 12a and 12b are capable of wireless communication with each other within a comparatively small area. Therefore, it is possible to make the authentication object apparatuses 13a and 13b perform the successful authentication behavior only when the users who possess the mobile station apparatuses 12a and 12b are in the vicinity of the authentication object apparatuses 13a and 13b, respectively. As a result, it is possible to further assuredly reduce the possibility that the successful authentication behavior may be unauthorizedly performed.

Further, according to the wireless communication system 1, it is possible to set the mobile station apparatuses 12a and 12b utilized for the authentication process to each combination of the authentication object apparatuses 13a and 13b with the successful authentication behavior. As a result, it is possible to improve the convenience for the users.

In addition, in the first exemplary embodiment, the management apparatus 12c is a cell-phone. However, it may also be an information processing apparatus such as personal computers and the like. Further, for a modification of the first exemplary embodiment, the management apparatus 12c may also have the function of the mobile station apparatus 12a in addition to the function of its own. Furthermore, for another modification of the first exemplary embodiment, each of the mobile station apparatuses 12a and 12b may also have the function of the management apparatus 12c in addition to the function of their own.

Further, for yet another modification of the first exemplary embodiment, the identifier storage portion 23 of the base station apparatus 11 may also be configured to associate the mobile station apparatus identifier, the authentication object apparatus identifier, the behavior specification information, and an unauthorized utilization notification destination identifier with each other, and store the associated members. Herein, the unauthorized utilization notification destination identifier is for identifying the mobile station apparatus which is the destination of the unauthorized utilization notification.

In this case, the unauthorized utilization notification transfer portion 27 is configured to transmit the unauthorized utilization notification, when received, to the mobile station apparatus identified by the unauthorized utilization notification destination identifier associated with the authentication object apparatus identifier included in the unauthorized utilization notification, among the unauthorized utilization notification destination identifiers stored in the identifier storage portion 23.

Further, for yet another modification of the first exemplary embodiment, the identifier storage portion 23 of the base station apparatus 11 may also be configured to associate the mobile station apparatus identifier, the authentication object apparatus identifier, the behavior specification information, and a successful authentication notification destination identifier with each other, and store the associated members. Herein, the successful authentication notification destination identifier is for identifying the mobile station apparatus which is the destination of the successful authentication notification.

In this case, the successful authentication notification transmission portion 26 is configured to transmit the successful authentication notification to the mobile station apparatus identified by the successful authentication notification destination identifier associated with the authentication object apparatus identifier for identifying the authentication object apparatus, among the successful authentication notification destination identifiers stored in the identifier storage portion 23, when the successful authentication information transmission portion 25 has transmitted the successful authentication information to the authentication object apparatuses 13a and 13b,

### <A Second Exemplary Embodiment>

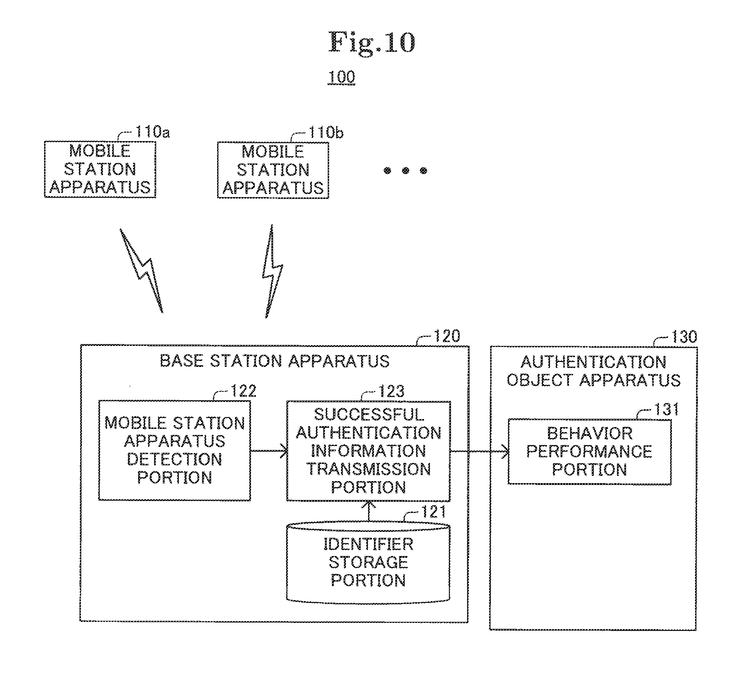

Next, a description will be made with respect to a wireless communication system in accordance with a second exemplary embodiment of the present invention in reference to Fig. 10.
A wireless communication system 100 in accordance with the second exemplary embodiment includes a plurality of mobile station apparatuses 110a, 110b, etc., a base station apparatus 120, and an authentication object apparatus 130. The base station apparatus 120 relays communications between the mobile station apparatuses 110a, 110b, etc., and another mobile station apparatus through wireless communications with the mobile station apparatuses 110a, 110b, etc.

The base station apparatus 120 and the authentication object apparatus 130 are configured to be able to communicate with each other.
The function of the base station apparatus 120 includes an identifier storage portion 121 (identifier storage means), a mobile station apparatus detection portion 122 (mobile station apparatus detection means), and a successful authentication information transmission portion 123 (successful authentication information transmission means).

The identifier storage portion 121 associates a mobile station apparatus identifier for identifying the mobile station apparatuses 110a, 110b, etc., and an authentication object apparatus identifier for identifying the authentication object apparatus 130 with each other, and stores the associated identifiers.

The mobile station apparatus detection portion 122 detects the mobile station apparatuses 110a, 110b, etc., which are in a state of being capable of wireless communication with the base station apparatus 120.
The successful authentication information transmission portion 123 transmits successful authentication information which indicates a successful authentication to the authentication object apparatus 130 identified by the authentication object apparatus identifier which is associated with the mobile station apparatus identifier for identifying the mobile station apparatuses 110a, 110b, etc., detected by the mobile station apparatus detection portion 122.

The function of the authentication object apparatus 130 includes a behavior performance portion 131 (behavior performance means).
Having received the successful authentication information from the base station apparatus 120, the behavior performance portion 131 performs a predetermined successful authentication behavior.

Thereby, when the mobile station apparatuses 110a, 110b, etc., are located within the area of being able to communicate with the base station apparatus 120, the authentication object apparatus 130 performs the successful authentication behavior, which is, for example, to set the authentication object apparatus 130 to a state in which the user is able to make the authentication object apparatus 130 carry out any process, to set the authentication object apparatus 130 to a state of being able to communicate with a specific information processing system (a login state), etc. Thereby, the successful authentication behavior can be prevented from unauthorized performance under the circumstance that the authorized users who possess the mobile station apparatuses 110a, 110h, etc., are not in the vicinity of the authentication object apparatus 130, respectively.

Further, according to the wireless communication system 100, it is unnecessary to display an image requesting the user to input authentication information (for example, a user ID and a password). Therefore, it is possible to reduce the possibility that the user may realize the reason why the successful authentication behavior is not performed. As a result, it is possible to reduce the possibility that an unauthorized user may unauthorizedly make the authentication object apparatus 130 perform the successful authentication behavior (that is, to improve the security of the authentication object apparatus 130).

In this manner, according to the above wireless communication system 100, it is possible to reduce the possibility that the successful authentication behavior may be unauthorizedly performed.
In addition, according to the wireless communication system 100, since it is unnecessary for the user to input authentication information, it is possible to reduce user's time and effort for making the authentication object apparatus 130 perform the successful authentication behavior.

Hereinabove, the present invention was described with reference to the respective exemplary embodiments. However, the present invention is not limited to these exemplary embodiments. Those skilled in the art may apply various modifications to the configuration and details of the present invention without departing from the spirit and scope of the present invention.

For example, each function of the wireless communication systems in the exemplary embodiments has been implemented by a CPU executing a computer program (software).
However, it may also be implemented by hardware such as circuits and the like.

Further, in the exemplary embodiments, the computer programs were stored in a storage device. However, they may also be stored in a recording medium which can be read out by a computer. The recording medium can be, for example, a portable medium such as flexible dick units, optical disks, magnetooptic disks, semiconductor memories, and the like.

Further, as yet another modification of the exemplary embodiments, any combination of the aforementioned exemplary embodiments and modifications may also be adopted.

### <Supplementary Notes>

The whole or part of the exemplary embodiments disclosed above can be described as, but not limited to, the following supplementary notes.

### (Supplementary Note 1)

A wireless communication system comprising:
a plurality of mobile station apparatuses;
a base station apparatus relaying communications between one of the mobile station apparatuses and another one of the mobile station apparatuses through wireless communication with the one of the mobile station apparatuses; and
an authentication object apparatus,
the base station apparatus and the authentication object apparatus being configured to be able to communicate with each other;
the base station apparatus having an identifier storage means which associates a mobile station apparatus identifier for identifying one of the mobile station apparatuses with an authentication object apparatus identifier for identifying the authentication object apparatus and stores the associated identifiers, a mobile station apparatus detection means for detecting one of the mobile station apparatuses which is in a state of being capable of wireless communication with the base station apparatus, and a successful authentication information transmission means for transmitting successful authentication information indicating a successful authentication to the authentication object apparatus which is identified by the authentication object apparatus identifier associated with the mobile station apparatus identifier for identifying the detected mobile station apparatus; and
the authentication object apparatus having a behavior performance means for performing a predetermined successful authentication behavior when having received the successful authentication information from the base station apparatus.

According to the above wireless communication system, when the mobile station apparatus is located within the area of being able to communicate with the base station apparatus, the authentication object apparatus performs the successful authentication behavior, which is, for example, to set the authentication object apparatus to a state in which the user is able to make the authentication object apparatus carry out any process, to set the authentication object apparatus to a state of being able to communicate with a specific information processing system (a login state), etc. Thereby, the successful authentication behavior can be prevented from unauthorized performance under the circumstance that the authorized user who possesses the mobile station apparatus is not in the vicinity of the authentication object apparatus.

Further, according to the wireless communication system, it is unnecessary to display an image requesting the user to input authentication information (for example, a user ID and a password). Therefore, it is possible to reduce the possibility that the user may realize the reason why the successful authentication behavior is not performed. As a result, it is possible to reduce the possibility that an unauthorized user may unauthorizedly make the authentication object apparatus perform the successful authentication behavior (that is, to improve the security of the authentication object apparatus).
In this manner, according to the wireless communication system, it is possible to reduce the possibility that the successful authentication behavior may be unauthorizedly performed.

In addition, according to the wireless communication system, since it is unnecessary for the user to input authentication information, it is possible to reduce user's time and effort for making the authentication object apparatus perform the successful authentication behavior.

### (Supplementary Note 2)

The wireless communication system according to Supplementary Note 1, wherein the base station apparatus constitutes a femtocell.

Thus, in the wireless communication system forming a femtocell, the base station apparatus and the mobile station apparatuses are capable of wireless communication with each other within a comparatively small area. Therefore, it is possible to make the authentication object apparatus perform the successful authentication behavior only when the users who possess the mobile station apparatuses are in the vicinity of the authentication object apparatus, respectively. As a result, it is possible to further assuredly reduce the possibility that the successful authentication behavior may be unauthorizedly performed.

### (Supplementary Note 3)

The wireless communication system according to Supplementary Note 1 or 2, wherein the identifier storage means is configured to associate the mobile station apparatus identifier, the authentication object apparatus identifier, and a behavior specification information for specifying the successful authentication behavior with each other and store the associated identifiers and information; the successful authentication information transmission means is configured to transmit the successful authentication information including the behavior specification information associated with the mobile station apparatus identifier to the authentication object apparatus identified by the authentication object apparatus identifier associated with the mobile station apparatus identifier for identifying the detected mobile station apparatus; and the behavior performance means is configured to perform the successful authentication behavior specified by the behavior specification information included in the successful authentication information when having received the successful authentication information from the base station apparatus.

Thereby, it is possible to set the mobile station apparatus utilized for the authentication process to each combination of the authentication object apparatus with the successful authentication behavior. As a result, it is possible to improve the convenience for the user.

### (Supplementary Note 4)

The wireless communication system according to any one of Supplementary Notes 1 to 3, wherein the base station apparatus has a successful authentication notification transmission means for transmitting a successful authentication notification indicating that the authentication object apparatus has succeeded in authentication to the mobile station apparatus identified by the mobile station apparatus identifier associated with the authentication object apparatus identifier for identifying the authentication object apparatus when transmitting the successful authentication information to the authentication object apparatus; and the mobile station apparatus has a successful authentication notification output means for receiving the successful authentication notification and outputting the received successful authentication notification.

Thereby, it is possible to let the user of the mobile station apparatus know that the authentication object apparatus has succeeded in authentication.

### (Supplementary Note 5)

The wireless communication system according to Supplementary Note 4, wherein the successful authentication notification output, means is configured to output information urging to input stop instruction information instructing to stop performing the successful authentication behavior when having received the successful authentication notification; the mobile station apparatus further has a performance stop instruction transmission means for transmitting a performance stop instruction for instructing to stop performing the successful authentication behavior to the base station apparatus when the stop instruction information has been input; the base station apparatus has a performance stop instruction transfer means for receiving the performance stop instruction and transmitting the received performance stop instruction to the authentication object apparatus; and the behavior performance means is configured to stop performing the successful authentication behavior when having received the performance stop instruction.

Thereby, being notified that the authentication object apparatus has succeeded in authentication, the user of the mobile station apparatus is able to stop performing the successful authentication behavior if not desiring the authentication object apparatus to perform the successful authentication behavior. As a result, the mobile station apparatus can be improved in convenience for the user.

### (Supplementary Note 6)

The wireless communication system according to any one of Supplementary Notes 1 to 5, wherein the authentication object apparatus has an unauthorized utilization notification transmission means for transmitting an unauthorized utilization notification indicating that the authentication object apparatus is being unauthorizedly utilized to the base station apparatus when having been instructed to perform the successful authentication behavior without receiving the successful authentication information; the base station apparatus has an unauthorized utilization notification transfer means for transmitting the unauthorized utilization notification to the mobile station apparatus identified by the mobile station apparatus identifier associated with the authentication object apparatus identifier for identifying the authentication object apparatus when having received the unauthorized utilization notification from the authentication object apparatus; and the mobile station apparatus has an unauthorized utilization notification output means for receiving the unauthorized utilization notification and outputting the received unauthorized utilization notification.

Thereby, it is possible to let the user of the mobile station apparatus know that the authentication object apparatus is being unauthorizedly utilized.

### (Supplementary Note 7)

The wireless communication system according to Supplementary Note 6, wherein the unauthorized utilization notification output means is configured to output information urging to input authorization instruction information instructing to authorize performance of the successful authentication behavior when having received the unauthorized utilization notification; the mobile station apparatus further has a performance authorization instruction transmission means for transmitting a performance authorization instruction for instructing to authorize performance of the successful authentication behavior to the base station apparatus when the authorization instruction information has been input; the base station apparatus has a performance authorization instruction transfer means for receiving the performance authorization instruction and transmitting the received performance authorization instruction to the authentication object apparatus; and the behavior performance means is configured to perform the successful authentication behavior when having received the performance authorization instruction.

Thereby, being notified that the authentication object apparatus is being unauthorizedly utilized, the user of the mobile station apparatus is able to make it perform the successful authentication behavior if desiring the authentication object apparatus to perform the successful authentication behavior. As a result, the mobile station apparatus and the authentication object apparatus can be improved in convenience for the user.

### (Supplementary Note 8)

The wireless communication system according to any one of Supplementary Notes 1 to 7 further comprising a management apparatus being configured to be able to communicate with the base station apparatus, wherein the mobile station apparatus has an identifier transmission means for transmitting the mobile station apparatus identifier for identifying the mobile station apparatus to the base station apparatus when the mobile station apparatus is in a state of being capable of wireless communication with the base station apparatus; the authentication object apparatus has an identifier transmission means for transmitting the authentication object apparatus identifier for identifying the authentication object apparatus to the base station apparatus; and the base station apparatus has an identifier transfer means for receiving the mobile station apparatus identifier and the authentication object apparatus identifier and transmitting the received mobile station apparatus identifier and authentication object apparatus identifier to the management apparatus; the management apparatus has an information output means for receiving the mobile station apparatus identifier and the authentication object apparatus identifier and outputting information urging to input association information for associating the received mobile station apparatus identifier and authentication object apparatus identifier with each other, and an association information transmission means for transmitting the association information to the base station apparatus when the association information has been input; and the base station apparatus further has an identifier storage processing means for receiving the association information, associating the mobile station apparatus identifier and the authentication object apparatus identifier with each other based on the received association information, and storing the associated identifiers in the identifier storage means.

### (Supplementary Note 9)

The wireless communication system according to any one of Supplementary Notes 1 to 8, wherein the mobile station apparatus is a cell-phone.

### (Supplementary Note 10)

A wireless communication method being applied to a wireless communication system comprising: a plurality of mobile station apparatuses; a base station apparatus relaying communications between one of the mobile station apparatuses and another one of the mobile station apparatuses through wireless communication with the one of the mobile station apparatuses; and an authentication object apparatus configured to be able to communicate with the base station apparatus, the method comprising:
detecting, by the base station apparatus, one of the mobile station apparatuses which is in a state of being capable of wireless communication with the base station apparatus;
transmitting, by the base station apparatus, successful authentication information indicating a successful authentication to the authentication object apparatus identified by an authentication object apparatus identifier which is associated with a mobile station apparatus identifier for identifying the detected mobile station apparatus, and stored in a storage device, among authentication object apparatus identifiers for identifying the authentication object apparatus; and
performing, by the authentication object apparatus, a predetermined successful authentication behavior when having received the successful authentication information from the base station apparatus.

### (Supplementary Note 11)

The wireless communication method according to Supplementary Note 10 further comprising: transmitting, by the base station apparatus, a successful authentication notification indicating that the authentication object apparatus has succeeded in authentication to the mobile station apparatus identified by the mobile station apparatus identifier associated with the authentication object apparatus identifier for identifying the authentication object apparatus when having transmitted the successful authentication information to the authentication object apparatus; and receiving the successful authentication notification and outputting the received successful authentication notification, by the mobile station apparatus.

### (Supplementary Note 12)

The wireless communication method according to Supplementary Note 11 further comprising: outputting, by the mobile station apparatus, information urging to input stop instruction information instructing to stop performing the successful authentication behavior when having received the successful authentication notification; transmitting, by the mobile station apparatus, a performance stop instruction for instructing to stop performing the successful authentication behavior to the base station apparatus when the stop instruction information has been input; receiving the performance stop instruction and transmitting the received performance stop instruction to the authentication object apparatus, by the base station apparatus; and stopping, by the authentication object apparatus, performing the successful authentication behavior when having received the performance stop instruction.

### (Supplementary Note 13)

The wireless communication method according to any one of Supplementary Notes 10 to 12 further comprising: transmitting, by the authentication object apparatus, an unauthorized utilization notification indicating that the authentication object apparatus is being unauthorizedly utilized to the base station apparatus when the authentication object apparatus has been instructed to perform the successful authentication behavior without receiving the successful authentication information; transmitting, by the base station apparatus, the unauthorized utilization notification to the mobile station apparatus identified by the mobile station apparatus identifier associated with the authentication object apparatus identifier for identifying the authentication object apparatus when the base station apparatus has received the unauthorized utilization notification from the authentication object apparatus; and receiving the unauthorized utilization notification and outputting the received unauthorized utilization notification, by the mobile station apparatus.

### (Supplementary Note 14)

The wireless communication method according to Supplementary Note 13 further comprising: outputting, by the mobile station apparatus, information urging to input authorization instruction information instructing to authorize performance of the successful authentication behavior when having received the unauthorized utilization notification; transmitting, by the mobile station apparatus, a performance authorization instruction for instructing to authorize performance of the successful authentication behavior to the base station apparatus when the authorization instruction information has been input; receiving the performance authorization instruction and transmitting the received performance authorization instruction to the authentication object apparatus, by the base station apparatus; and performing, by the authentication object apparatus, the successful authentication behavior when having received the performance authorization instruction.

### (Supplementary Note 15)

A base station apparatus relaying communication between a mobile station apparatus and another mobile station apparatus through wireless communication with the mobile station apparatus and being configured to be able to communicate with an authentication object apparatus, the base station apparatus comprising:
an identifier storage means for associating a mobile station apparatus identifier for identifying the mobile station apparatus and an authentication object apparatus identifier for identifying the authentication object apparatus with each other, and storing the associated identifiers;
a mobile station apparatus detection means for detecting the mobile station apparatus which is in a state of being capable of wireless communication with the base station apparatus; and
a successful authentication information transmission means for transmitting successful authentication information indicating a successful authentication to the authentication object apparatus identified by the authentication object apparatus identifier associated with the mobile station apparatus identifier for identifying the detected mobile station apparatus.

### (Supplementary Note 16)

The base station apparatus according to Supplementary Note 15 further comprising a successful authentication notification transmission means for transmitting a successful authentication notification indicating that the authentication object apparatus has succeeded in authentication to the mobile station apparatus identified by the mobile station apparatus identifier associated with the authentication object apparatus identifier for identifying the authentication object, apparatus when having transmitted the successful authentication information to the authentication object apparatus.

### (Supplementary Note 17)

The base station apparatus according to Supplementary Note 15 or 16 further comprising an unauthorized utilization notification transfer means for transmitting an unauthorized utilization notification to the mobile station apparatus identified by the mobile station apparatus identifier associated with the authentication object apparatus identifier for identifying the authentication object, apparatus when having received the unauthorized utilization notification indicating that the authentication object apparatus is being unauthorizedly utilized from the authentication object apparatus.

### (Supplementary Note 18)

A computer program product comprising computer implementable instructions to make a base station apparatus, which is configured to relay communication between a mobile station apparatus and another mobile station apparatus through wireless communication with the mobile station apparatus and to be able to communicate with an authentication object apparatus, function as:
a mobile station apparatus detection means for detecting the mobile station apparatus which is in a state of being capable of wireless communication with the base station apparatus; and
a successful authentication information transmission means for transmitting successful authentication information indicating a successful authentication to the authentication object apparatus identified by an authentication object apparatus identifier which is associated with a mobile station apparatus identifier for identifying the detected mobile station apparatus and stored in a storage device, among authentication object apparatus identifiers for identifying the authentication object apparatus.

### (Supplementary Note 19)

The computer program product according to Supplementary Note 18 further comprising computer implementable instructions to make the base station apparatus function as a successful authentication notification transmission means for transmitting a successful authentication notification indicating that the authentication object apparatus has succeeded in authentication to the mobile station apparatus identified by the mobile station apparatus identifier associated with the authentication object apparatus identifier for identifying the authentication object apparatus when the successful authentication information has been transmitted to the authentication object apparatus.

### (Supplementary Note 20)

The computer program product according to Supplementary Note 18 or 19 further comprising computer implementable instructions to make the base station apparatus function as an unauthorized utilization notification transfer means for transmitting an unauthorized utilization notification to the mobile station apparatus identified by the mobile station apparatus identifier associated with the authentication object apparatus identifier for identifying the authentication object apparatus when the unauthorized utilization notification indicating that the authentication object apparatus is being unauthorizedly utilized has been received from the authentication object apparatus.

The present invention is applicable to cell-phone systems and the like which include a plurality of cell-phones, a base station apparatus forming a femtocell, and an information processing apparatus.

## Claims

1. A wireless communication system comprising:
a plurality of mobile station apparatuses;
a base station apparatus relaying communications between one of the mobile station apparatuses and another one of the mobile station apparatuses through wireless communication with the one of the mobile station apparatuses; and
an authentication object apparatus,
the base station apparatus and the authentication object apparatus being configured to be able to communicate with each other;
the base station apparatus having an identifier storage means which associates a mobile station apparatus identifier for identifying one of the mobile station apparatuses with an authentication object apparatus identifier for identifying the authentication object apparatus and stores the associated identifiers, a mobile station apparatus detection means for detecting one of the mobile station apparatuses which is in a state of being capable of wireless communication with the base station apparatus, and a successful authentication information transmission means for transmitting successful authentication information indicating a successful authentication to the authentication object apparatus which is identified by the authentication object apparatus identifier associated with the mobile station apparatus identifier for identifying the detected mobile station apparatus; and
the authentication object apparatus having a behavior performance means for performing a predetermined successful authentication behavior when having received the successful authentication information from the base station apparatus.

2. The wireless communication system according to Claim 1, wherein the base station apparatus constitutes a femtocell.

3. The wireless communication system according to Claim 1 or 2, wherein the identifier storage means is configured to associate the mobile station apparatus identifier, the authentication object apparatus identifier, and a behavior specification information for specifying the successful authentication behavior with each other and store the associated identifiers and information; the successful authentication information transmission means is configured to transmit the successful authentication information including the behavior specification information associated with the mobile station apparatus identifier to the authentication object apparatus identified by the authentication object apparatus identifier associated with the mobile station apparatus identifier for identifying the detected mobile station apparatus; and the behavior performance means is configured to perform the successful authentication behavior specified by the behavior specification information included in the successful authentication information when having received the successful authentication information from the base station apparatus.

4. The wireless communication system according to any one of Claims 1 to 3, wherein the base station apparatus has a successful authentication notification transmission means for transmitting a successful authentication notification indicating that the authentication object apparatus has succeeded in authentication to the mobile station apparatus identified by the mobile station apparatus identifier associated with the authentication object apparatus identifier for identifying the authentication object apparatus when transmitting the successful authentication information to the authentication object apparatus; and the mobile station apparatus has a successful authentication notification output means for receiving the successful authentication notification and outputting the received successful authentication notification.

5. The wireless communication system according to Claim 4, wherein the successful authentication notification output means is configured to output information urging to input stop instruction information instructing to stop performing the successful authentication behavior when having received the successful authentication notification; the mobile station apparatus further has a performance stop instruction transmission means for transmitting a performance stop instruction for instructing to stop performing the successful authentication behavior to the base station apparatus when the stop instruction information has been input; the base station apparatus has a performance stop instruction transfer means for receiving the performance stop instruction and transmitting the received performance stop instruction to the authentication object apparatus; and the behavior performance means is configured to stop performing the successful authentication behavior when having received the performance stop instruction.

6. The wireless communication system according to any one of Claims 1 to 5, wherein the authentication object apparatus has an unauthorized utilization notification transmission means for transmitting an unauthorized utilization notification indicating that the authentication object apparatus is being unauthorizedly utilized to the base station apparatus when having been instructed to perform the successful authentication behavior without receiving the successful authentication information; the base station apparatus has an unauthorized utilization notification transfer means for transmitting the unauthorized utilization notification to the mobile station apparatus identified by the mobile station apparatus identifier associated with the authentication object apparatus identifier for identifying the authentication object apparatus when having received the unauthorized utilization notification from the authentication object apparatus; and the mobile station apparatus has an unauthorized utilization notification output means for receiving the unauthorized utilization notification and outputting the received unauthorized utilization notification.

7. The wireless communication system according to Claim 6, wherein the unauthorized utilization notification output means is configured to output information urging to input authorization instruction information instructing to authorize performance of the successful authentication behavior when having received the unauthorized utilization notification; the mobile station apparatus further has a performance authorization instruction transmission means for transmitting a performance authorization instruction for instructing to authorize performance of the successful authentication behavior to the base station apparatus when the authorization instruction information has been input; the base station apparatus has a performance authorization instruction transfer means for receiving the performance authorization instruction and transmitting the received performance authorization instruction to the authentication object apparatus; and the behavior performance means is configured to perform the successful authentication behavior when having received the performance authorization instruction.

8. A wireless communication method being applied to a wireless communication system comprising a plurality of mobile station apparatuses, a base station apparatus relaying communications between one of the mobile station apparatuses and another one of the mobile station apparatuses through wireless communication with the one of the mobile station apparatuses, and an authentication object apparatus configured to be able to communicate with the base station apparatus, the method comprising:
detecting, by the base station apparatus, one of the mobile station apparatuses which is in a state of being capable of wireless communication with the base station apparatus;
transmitting, by the base station apparatus, successful authentication information indicating a successful authentication to the authentication object apparatus identified by an authentication object apparatus identifier which is associated with a mobile station apparatus identifier for identifying the detected mobile station apparatus, and stored in a storage device, among authentication object apparatus identifiers for identifying the authentication object apparatus; and
performing, by the authentication object apparatus, a predetermined successful authentication behavior when having received the successful authentication information from the base station apparatus.

9. A base station apparatus relaying communication between a mobile station apparatus and another mobile station apparatus through wireless communication with the mobile station apparatus and being configured to be able to communicate with an authentication object apparatus, the base station apparatus comprising:
an identifier storage means for associating a mobile station apparatus identifier for identifying the mobile station apparatus and an authentication object apparatus identifier for identifying the authentication object apparatus with each other, and storing the associated identifiers;
a mobile station apparatus detection means for detecting the mobile station apparatus which is in a state of being capable of wireless communication with the base station apparatus;
and
a successful authentication information transmission means for transmitting successful authentication information indicating a successful authentication to the authentication object apparatus identified by the authentication object apparatus identifier associated with the mobile station apparatus identifier for identifying the detected mobile station apparatus.

10. A computer program product comprising computer implementable instructions to make a base station apparatus, which is configured to relay communication between a mobile station apparatus and another mobile station apparatus through wireless communication with the mobile station apparatus and to be able to communicate with an authentication object apparatus, function as:
a mobile station apparatus detection means for detecting the mobile station apparatus which is in a state of being capable of wireless communication with the base station apparatus; and
a successful authentication information transmission means for transmitting successful authentication information indicating a successful authentication to the authentication object apparatus identified by an authentication object apparatus identifier which is associated with a mobile station apparatus identifier for identifying the detected mobile station apparatus and stored in a storage device, among authentication object apparatus identifiers for identifying the authentication object apparatus.
